# EUROPÄISCHE PATENTSCHRIFT

(11) **EP 0 802 595 B1**
(45) Veröffentlichungstag und Bekanntmachung des Hinweises auf die Patenterteilung: **31.07.2002**
(21) Anmeldenummer: 97106219.5
(22) Anmeldetag: 16.04.1997
(51) Int. Cl.: H02B 11/127

(54) **Schaltfeld mit einem Fahrgestell**
Switch board with a chassis
Tableau de distribution avec un chassis

(30) Priorität: 18.04.1996 DE 19615312
(43) Veröffentlichungstag der Anmeldung: 22.10.1997
(73) Patentinhaber: AEG Sachsenwerk GmbH, D-93055 Regensburg (DE)
(72) Erfinder: Herrmann, Johann, 93055 Regensburg (DE); Reichl, Erwin, 93105 Tegernheim (DE)
(74) Vertreter: Dreiss, Fuhlendorf, Steimle & Becker

(56) Entgegenhaltungen:
- EP-A- 0 253 170
- DE-A- 3 117 495
- FR-A- 1 089 257
- US-A- 5 459 293

## Beschreibung

Die Erfindung betrifft ein Schaltfeld gemäß dem Oberbegriff des ersten Anspruchs.

Ein bekanntes Schaltfeld dieser Art (DE 3812853 C1) weist in einem Gerüst in die Gehäusetiefe parallel verlaufende Laufschienen auf, auf welchen ein Fahrgestell mit Laufrollen verfahrbar aufsitzt. Das Fahrgestell trägt drei in waagerechter Richtung nebeneinander angeordnete Schalterpole, von welchen je zwei senkrecht über-einander angeordnete Kontaktarme in die Gehäusetiefe frei hinausragen. Der so aus Fahrgestell, Schalterpolen und zugeordneten Betätigungseinrichtungen gebildete Schaltwagen ist mit einer horizontal verlaufenden Traverse versehen, die an der Frontseite des Fahrgestells anliegt und nach dem manuellen Einschieben des Schaltwagens in das Gerüst mit letzterem verriegelt wird. Die Anordnung ist dabei so getroffen, daß die Kontaktarme noch mit Abstand von im rückwärtigen Teil des Gerüsts angeordneten Gegenkontakten stehen. An der Traverse ist eine Gewindespindel drehbar, aber axial unverschiebbar gelagert, auf die ein mit dem Schaltwagen verbundenes Gewindemutterstück aufgedreht ist. Die Gewindespindel ist durch die Traverse hindurch zugänglich und mit einer Handkurbel kuppelbar, mittels welcher die Gewindespindel gedreht werden kann. Hierdurch kann der Schaltwagen unter Abstützung an der Traverse weiter in die Tiefe des Schaltfeldgerüsts bewegt werden, bis die Kontaktarme mit den zugeordneten gerüstfest angeordneten Gegenkontakten in elektrische Kontaktanlage treten. Die oberen Kontaktarme durchgreifen dabei Durchbrüche in einer senkrechten Trennwand, hinter welcher die mit Sammelschienen verbundenen zugehörigen Gegenkontakte angeordnet sind. Diesen Durchbrüchen ist eine gemeinsame Shutterblende zugeordnet, die parallel zur Trennwand verschiebbar gelagert ist und über ein Hebelgestänge mit einem von der Gewindespindel gesteuerten Betätigungshebel so in Wirkverbindung steht, daß in der ausgefahrenen Trennstellung des Schaltwagens die Shutterblende die Durchbrüche verschließt und zu Beginn der Einfahrbewegung bei der ersten Betätigung der Gewindespindel die Durchbrüche für das Einfahren der oberen Kontaktarme freigibt. Beim Zurückfahren des Schaltwagens in die anfängliche Ausfahrstellung wird mit der letzten Drehung der Gewindespindel auch die Shutterblende wieder in Schließstellung bewegt.

Aus der US-A-5 459 293 ist ein Schaltfeld mit einem in einem Gerüst auf parallelen Laufschienen verfahrbar geführten, mit wenigstens einem Schalter versehenen Fahrgestell bekannt geworden. Das Fahrgestell ist hierbei mit einer Antriebseinrichtung gekoppelt, welche ein Gewindemutterstück aufweist, das auf eine Gewindespindel aufgedreht ist. Die Gewindespindel ist gegen axiales Verstellen gesichert und in einer gegenüber den Laufschienen ortsfest fixierten Traverse drehbar gelagert. Weiterhin verläuft die Gewindespindel parallel zu und mittig zwischen den Laufschienen. Die Laufschienen sind starr mit der Traverse verbunden.

Der Nachteil der aus der DE 38 12 853 C1 und US-A-5 459 293 bekannten Aufbauten ist, dass das beim Einfahren des Schaltwagens an der Gewindespindel aufzubringende Drehmoment dann erheblich ansteigt, wenn die Kontaktarme in Steckverbindungen treten, da hier eine sehr hohe Kontaktdruckkraft zu überwinden ist.

Aus der DE 37 17 495 A1 ist ein Schaltfeld bekannt geworden, bei welchem das Fahrgestell über ein in Fahrrichtung des Fahrgestells wirkendes Kniehebelgetriebe mit zwei Kniehebelpaaren bewegt wird. Hierbei stützen sich die beiden Kniehebelgelenkpunkte an je einem Gewindemutterstück ab. Die Gewindemutterstücke liegen beide auf einer Gewindespindel, die zwei gegenläufige Gewindeabschnittshälften aufweist. Die Kniehebelpaare stützen sich hierbei einendig an dem Gehäuse des Schaltfelds, ab. Anderenends sind die Kniehebel am Fahrgestell schwenkbar angelenkt. Ein derartiger Stand der Technik weist den Nachteil auf, dass beim Betätigen der Gewindespindel zum Verfahren des Fahrgestells die Gewindespindel ihre Lage ändert. Ein weiterer Nachteil dieses Schaltfelds ist, dass bei relativ großen Verfahrwegen eine sehr lange Spindel erforderlich ist, da für jedes Gewindemutterstück lediglich die halbe Gewindespindellänge zur Verfügung steht.

Der vorliegenden Erfindung liegt daher die Aufgabe zugrunde, bei einem Schaltfeld gemäß dem Oberbegriff des ersten Anspruchs Maßnahmen zu treffen, durch welche eine Minderung des für das Zusammenfahren und Trennen der Kontaktarme und Gegenkontakte erforderlichen Drehmoments an der Gewindespindel erreicht wird. Hierbei soll die Gewindespindel ihre Lage nicht ändern, so dass die Gewindespindel problemlos auch über einen ortsfest angeordneten Motor angetrieben werden kann. Außerdem sollen relativ große Verfahrwege des Fahrgestells mit geringem Aufwand realisierbar sein.

Diese Aufgabe wird bei einem Schaltfeld mit den Merkmalen des Patentanspruchs 1 gelöst.

Bei einer Ausgestaltung eines Schaltfeldes gemäß der Erfindung wird durch die Anwendung eines Kniehebelgetriebes, das während der Einfahrbewegung des Fahrgestells aus einer Knicklage in achsengleiche Strecklage seines Kniehebelpaares verstellt wird, die für das Zusammenfahren der Kontakte erforderliche hohe Vorschubkraft dann aufgebracht, wenn das Fahrgestell weitgehend in seine Arbeitsposition eingefahren ist, die Kontakte also in Steckeingriff zu bringen sind. Zusätzlich wird noch erreicht, daß die im Betrieb auftretenden, auf den Schaltwagen wirkenden Reaktionskräfte insbesondere bei Kurzschluß nicht mehr auf die Gewindespindel einwirken, sondern über das jeweilige gestreckte Kniehebelpaar unmittelbar vom Fahrgestell auf die Traverse bzw. damit verbundene Bauelemente und von der Traverse auf das die Gegenkontakte tragende Gerüst übertragen werden. Vorzugsweise sind in einer parallel zur Ebene der Laufschienen liegenden Ebene zwei symmetrisch aufgebaute und angeordnete Kniehebelpaare vorgesehen. Für die Kopplung des oder der Kniehebelpaare mit dem Gewindemutterstück dient jeweils ein Lenkerhebel, der einerseits schwenkbar am Gewindemutterstück und andererseits mit dem die beiden Kniehebel eines Kniehebelpaares verbindenden gemeinsamen Kniehebelgelenk gelenkig verbunden ist. Jedenfalls bei symmetrischer Anordnung von zwei Kniehebelpaaren verläuft die Gewindespindel parallel zu und mittig zwischen den für das Fahrgestell vorgesehenen Laufschienen, um eine exakte Parallelverschiebung über den Fahrweg sicherzustellen und um auch im Betrieb auftretende Stromstoßkräfte kippfrei auffangen zu können. Dabei können die Laufschienen insbesondere starr mit der Traverse verbunden sein, wobei die Traverse zusammen mit den Laufschienen und einer dieselben tragenden Grundplatte als Einschubkassette ausgebildet sein kann, die zusammen mit dem darauf montierten Schaltwagen in das Gerüst einzuschieben und darin zu arretieren ist. Das Fahrgestell kann dadurch mit geringer Höhe ausgebildet werden und die Einheit aus Kassette und Schaltwagen oberhalb eines Kabelraumes in das Gerüst eingesetzt werden. Der Anlenkpunkt des jeweiligen Kniehebelpaares am Schaltwagen liegt in Richtung der Gehäusetiefe insbesondere weiter von der Traverse entfernt als der ortsfeste Anlenkpunkt. Dabei kann der ortsfeste Anlenkpunkt auch im mittleren Bereich zwischen den Endlagen des Gewinde-mutterstücks angeordnet sein. Zusätzlich kann der ortsfeste Anlenkpunkt in größerer radialer Entfernung von der Gewindespindel sitzen als der Anlenkpunkt des jeweiligen Kniehebelpaares am Fahrgestell. Auch kann der Kniehebelgelenkpunkt in Einfahrrichtung des Fahrgestells jeweils vor dem Gewindemutterstück liegen. Es ergibt sich hierdurch ein kompakter, den auftretenden Kräften angepaßter Aufbau des Kniehebelgetriebe. Dazu trägt insbesondere die Schrägstellung der Kniehebelpaare in ihrer gestreckten Stellung bei. Dabei ist es zweckmäßig, den Lenkerhebel jeweils etwa L-förmig auszubilden und mit seinem kurzen Schenkel am Gewindemutterstück und mit seinem langen Schenkel am Kniegelenk so anzulenken, daß der lange Schenkel in der Endlage des Gewindemutterstücks bei ausgefahrenem Schaltwagen parallel zur Längsachse der Gewindespindel und bei eingefahrenem Schaltwagen etwa senkrecht zur Streckachse des jeweiligen Kniehebelpaares steht. Um eine mechanisch stabile Abstützung des jeweiligen Kniehebelpaares zu erreichen, sitzt ihr ortsfester Anlenkpunkt insbesondere an der zugehörigen Laufschiene, die im Querschnitt U-förmig ausgebildet ist und daher hohe mechanische Belastungen aufnehmen kann. Der ortsfeste Anlenkpunkt ist dabei vorzugsweise so plaziert, daß er zwischen zwei Laufrädern des Fahrgestells sitzt, die der betreffenden Laufschiene zugeordnet sind. Der Abstand zwischen den Laufrädern ist dabei größer als die mit Hilfe der Gewindespindel erzeugbare Länge des Einfahr- bzw. Ausfahrweges des Schaltwagens. Die Laufräder können daher im normalen Einfahr- und Ausfahrbetrieb nicht gegen die ortsfesten Anlenkpunkte bzw. die damit verbundenen Kniehebel stoßen, zumal diese Kniehebel bei der Ausfahrbewegung, also beim Verstellen des Schaltwagens, in die elektrische Trennstellung aus ihrer geneigten in eine annähernd senkrechte Lage gegenüber den Laufschienen verstellt werden. Der Antrieb der Gewindespindel kann dabei durch eine auf das traversenseitige Ende aufsteckbare Handkurbel oder über ein Getriebe durch einen Elektromotor erfolgen.

Die Erfindung ist nachfolgend anhand von Prinzipskizzen eines Ausführungsbeispiels näher erläutert.
Es zeigen:
- Figur 1:: eine Querschnittsdarstellung durch ein Schaltfeld mit einem in Einfahrstellung befindlichen Schaltwagen,
- Figur 2:: eine Teildarstellung des in einer Kassette gelagerten Schaltwagens in einer Seitenansicht und
- Figur 3:: eine Draufsicht auf die Anordnung nach Figur 2 mit nur teilweise dargestelltem Schaltwagen, der sich in der in vollen Linien dargestellten Lage in Ausfahrstellung und in der in gestrichelten Linien dargestellten Lage in Einfahrstellung befindet.

Ein Schaltfeld, das insbesondere für die Anwendung in Mittelspannungsnetzen geeignet ist, weist ein quaderförmiges Gerüst (1) auf, das frontseitig im unteren Bereich und im mittleren Bereich je eine Tür (2,3) und im oberen Bereich einen Steuerkasten (4) aufweist. Durch die untere Tür (2) ist ein Kabelraum (5) mit von unten eingeführten Kabeln (6) vorgesehen, die über Stromschienen je Phase mit einem an der Rückseite (8) des Gerüsts (1) angeordneten Stromwandler (9) und einem darunter angeordneten Spannungswandler (10) elektrisch verbunden sind. Von den Stromwandlern (9) führen die Stromleiter (7) zu darüber angeordneten Gegenkontakten (11), die über Isolierhülsen (12) an einer mit dem Gestell (1) verbundenen Trennwand (13) fest verbunden sind. Darüber befindet sich in entsprechender Anordnung eine weitere Isolierhülse (12) mit darin festgesetztem Gegenkontakt (11), der jeweils über weitere Stromleiter (7) mit einer Sammelschiene eines dreiphasigen Sammelschienensystems (14) verbunden ist. Bei dreiphasiger Ausgestaltung sind jeweils drei Gegenkontakte in waagerechter Richtung nebeneinander in der Trennwand (13) angeordnet. Oberhalb des Kabelraums (5) und zwischen der mittleren Tür (3) sowie der Trennwand (13) befindet sich ein Schalterraum (15), in dem je Phase ein Leistungsschalter (16) in Form eines Vakuumsschalters mit senkrechter Achse angeordnet ist. Mit den Anschlüssen des Leistungsschalters (16) sind in der Höhe mit Abstand angeordnete Kontaktarme (17) verbunden, die in die Gerüsttiefe hineinragen und in der dargestellten Einfahrstellung des Leistungsschalters (16) in Steckkontaktverbindung mit den gerüstfesten Gegenkontakten (11) stehen. Die Leistungsschalter (16) sitzen an einem Antriebskasten (18), von dem eine Betätigungsstange (19) zum beweglichen Kontaktbolzen (20) des Leistungsschalters führt und über den die Ein- oder Ausschaltung des Leistungsschalters (16) erfolgt. Der Antriebskasten (18) ist auf einem Fahrgestell (21) montiert, das über Laufräder (22) in Laufschienen (23) verfahrbar geführt ist, welche aus dem Bereich der Tür (3) in die Gerüsttiefe zur Trennwand (13) hin parallel zueinander verlaufen. Die Laufschienen (23) sitzen auf einer Bodenplatine (24.1) einer aus Stabilitätsgründen wannenförmig gestalteten Einschubkassette (24), welche nach dem Einschieben der aus der Kassette (24), dem Fahrgestell (21), dem Antriebskasten (18) und dem Leistungschalter (16) gebildeten Schaltwagen-Einheit mittels einer horizontal verlaufenden Traverse (25) lösbar am Gerüst (1) arretiert wird. Beim Einsetzen dieser Einheit in den Schalterraum (15) befindet sich jedoch das Fahrgestell (21) mit dem Antriebskasten (18) und den Leistungsschaltern (16) in einer Ausfahrstellung, in welcher der der Tür (3) zugewandte Antriebskasten nahe an der Tür (3) steht und die Steckverbindungen (11,17) durch die entsprechend weit zur Tür (3) hin verstellten Kontaktarme (17) aufgetrennt sind.

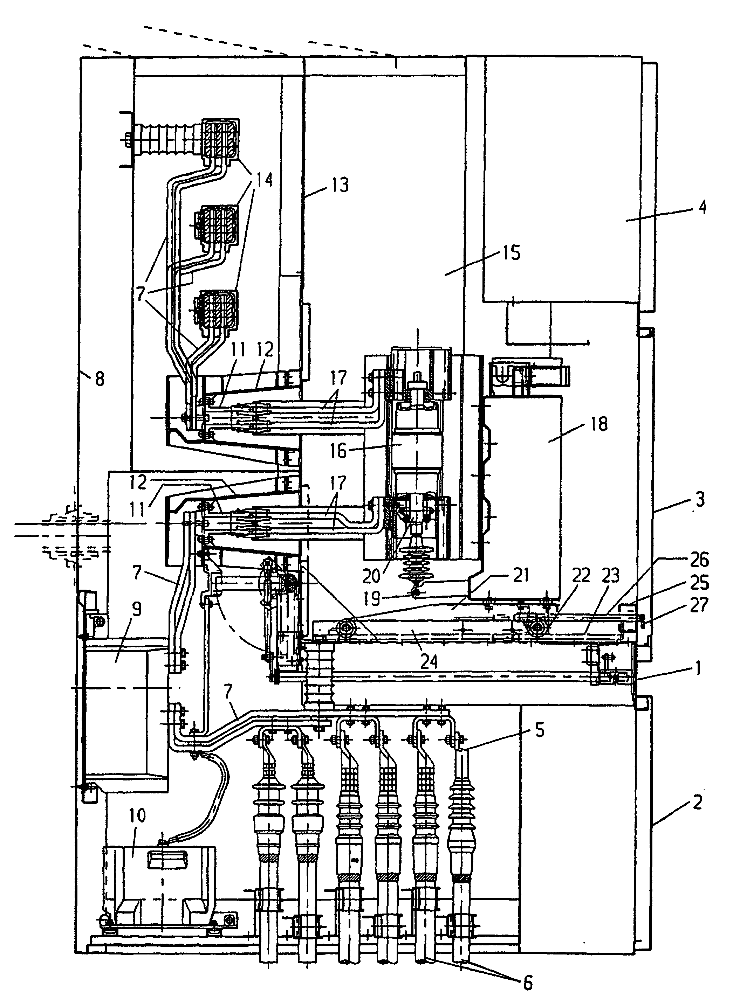

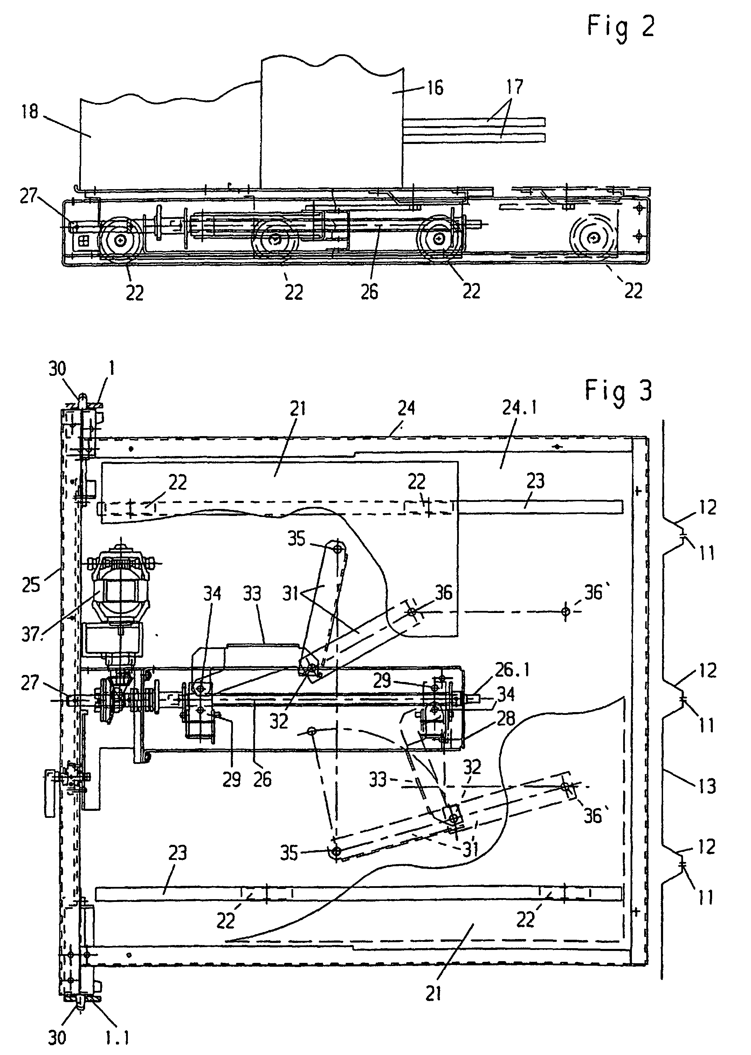

Um das Fahrgestell (21) in der Kassette (24) verfahren zu können, ist eine Antriebseinrichtung vorgesehen, die eine Gewindespindel (26) umfaßt, welche gegen axiales Verstellen gesichert in der Traverse (25) drehbar gelagert ist und ein zur Tür (3) hin weisendes Kuppelstück (27.) zum Aufstecken einer Handkurbel aufweist. Die zumindest an ihrem inneren Ende (26.1) zusätzlich auf der Bodenplatine (24.1) der Kassette (24) in einer Stützlasche (28) gelagerte Gewindespindel (26) trägt auf ihrem Gewindeabschnitt ein Gewindestück (29), welches durch Drehen der Gewindespindel (26) aus der in Figur 3 in vollen Linien dargestellten, der Traverse (25) benachbarten Ausgangsstellung nach dem Einrasten von der Traverse (25) zugeordneten Verriegelungszapfen (30) in das Gestell (1) so weit zu verstellen ist, bis es die in Figur 3 gestrichelt dargestellte Endstellung erreicht, in welcher das Gewindemutterstück (29) benachbart zur Stützlasche (28) steht. In der in Figur 3 dargestellten linken Ausgangslage des Gewindemutterstücks (29) befindet sich das Fahrgestell mit dem Leistungschalter (16) in Ausfahrstellung mit getrennten Kontakten, während sich das Fahrgestell in der gestrichelt dargestellten rechten Endlage des Gewindemutterstücks (29) in der Position gemäß Figur 1 mit zusammengesteckten Kontakten befindet.

Um eine komfortable Verstellung des Fahrgestells (21) in und aus der Einfahrstellung (Figur 1) zu ermöglichen und in der Einfahrstellung das Gewindemutterstück (29) von Kräften zu entlasten, die über den Leistungsschalter (16) auf das Fahrgestell (21) insbesondere beim Auftreten von Kurzschlußströmen wirken, ist ein in Fahrrichtung des Fahrgestells 21 wirkendes Kniehebelgetriebe vorgesehen. Dieses Kniehebelgetriebe weist vorliegend spiegelbildlich zur Längsachse der Gewindespindel (26) in einer parallel zur Ebene der Laufschienen liegenden Ebene zwei Kniehebelpaare (31) auf, wobei die Kniehebel (31) jeden Paares am gemeinsamen Kniehebelgelenkpunkt (32) mit einem Lenker (33) gelenkig verbunden sind, der andernends um einen Drehpunkt (34) am Gewindemutterstück (29) schwenkbar gelagert ist. Ein Kniehebel (31) jedes Kniehebelpaares ist an der Kassette (24) um einen Drehpunkt (35) schwenkbar, während der zweite Kniehebel (31) jedes Kniehebelpaares um einen Drehpunkt (36) am Fahrgestell (21) schwenkbar befestigt ist. Der Anlenkpunkt (36) des mit dem Schaltwagen verbundenen Kniehebels (31) jedes Kniehebelpaares liegt weiter von der Traverse (25) entfernt als der ortsfeste, an der Kassette (24) festgesetzte Anlenkpunkt (35) des zweiten Kniehebels (31) jeden Kniehebelpaares. Dabei sitzt der ortsfeste Anlenkpunkt (35) im mittleren Bereich zwischen den axialen Endlagen des Gewindemutterstücks (29) und in größerer radialer Entfernung von der Gewindespindel (26) als der Anlenkpunkt (36) des jeweiligen Kniehebels (31) eines Kniehebelpaares am Fahr-. gestell (21). Die Kniehebelpaare (31) stehen daher in Ausfahrstellung des Schaltwagens (16,21) in V-förmiger Zuordnung gemäß der oberen, in Fig 3 in vollen Linien gezeigten Darstellung, während in der Einfahrstellung (gemäß Figur 1) die Kniehebel (31) der beiden Kniehebelpaare sich in axial über die Drehpunkte (36,32,35) gestreckter Lage befinden(Fig 3,untere gestrichelte Darstellung). Der Kniehebelgelenkpunkt (32) befindet sich dabei in Einfahrrichtung des Fahrgestells (21) jeweils vor dem Gewindemutterstück (29) mit variierendem, radialem Abstand von der Gewindespindel (26). Der Lenkerhebel (33) ist im übrigen etwa L-förmig ausgebildet und mit seinem kürzeren Schenkel am Gewindemutterstück (29) und mit seinem längeren Schenkel am Kniegelenk (32) angelenkt. Dabei steht der kürzere Schenkel in der Endlage des Gewindemutterstücks (29) bei ausgefahrenem Schaltwagen (Figur 3, volle Linien) zumindest annähernd senkrecht und der längere Schenkel annähernd parallel zur Längsachse der Gewindespindel (26).

Wird, ausgehend von dieser Ausgangslage, in welcher sich das Fahrgestell (21) in Ausfahrstellung befindet, die Gewindespindel (26) manuell oder mit Hilfe eines Elektromotors (37) in Drehung versetzt, wandert das Gewindemutterstück (29) zur Stützlasche (28) hin. Dabei wird das Fahrgestell (21) durch die in Verstellrichtung weisende Lage der Lenkerhebel (33) und der nur geringfügig dagegen geneigten, mit dem Fahrgestell (21) gekoppelten Kniehebeln (31) ein Vorschub erreicht, der anfangs der Steigung der Gewindespindel in etwa entspricht. Mit zunehmender axialer Verstellung des Gewindemutterstücks (29) zur Stützlasche (28) hin wird nach einem Verstellweg , nachdem der ortsfest angelenkte Lenker (31) der Kniehebelpaare z.B. eine senkrecht zur Gewindespindel (26) gerichtete Schwenklage überschritten hat, das jeweilige Kniehebelpaar unter Ausschwenken des Kniehebelgelenkpunkts (32) fortschreitend der Strecklage zugeführt. Die Vorschubbewegung des Fahrgestells (21) nimmt damit je Umdrehung der Gewindespindel (26) ab, jedoch steigert sich aufgrund der Kniehebelwirkung der Kniehebelpaare (31) die in Vorschubrichtung wirkende Kraftkomponente bei unverändertem Antriebsdrehmoment an der Gewindespindel (26). Wenn demnach relativ kurz vor Erreichen der in Figur 3 in strichpunktierten Lagen dargestellten Endlage, die der Einfahrstellung des Fahrgestells (21) entspricht, die mit Federkontaktstücken bestückten Kontaktarme (17) des Leistungsschalters (16) in Berührung mit den feststehenden Gegenkontakten (11) treten und unter erheblichem Kraftaufwand darauf aufgeschoben werden müssen, dann bedarf es an den Kniehebel-gelenkpunkten (32) bei annähernd gestreckten Kniehebeln (31) nur noch einer relativ geringen Kraft, um den durch mechanische Reibung erzeugten Kontaktgleitwiderstand zu überwinden. In analoger Weise ist dann auch zum überwinden der hohen Reibungskräfte zwischen den Kontakten beim Bewegen des Fahrgestells (21) aus der Einfahrstellung heraus nur ein entsprechend geringes Drehmoment an der Gewindespindel (26) erforderlich, weil die Rückzugskräfte am Kniehebelgelenk (32) sehr klein sind, wenn die Kniehebelpaare (31) wieder aus der Strecklage zurückgeführt werden.

Die spiegelbildliche Anordnung der Kniehebelpaare (31) bewirkt durch das Zusammenarbeiten mit den Lenkerhebeln (33) und dem gemeinsamen Gewindemutterstück (29) eine exakte Parallelführung des Fahrgestells (21) und in gestreckter Lage der Kniehebelpaare (31) werden die im Betrieb auftretenden, vom Stromfluß abhängigen Stoßkräfte von den gestreckten Kniehebelpaaren (31) unmittelbar in die Kassette (24) eingeleitetund so vom Gewindemutterstück ferngehalten. Im übrigen wird die Gewindespindel (26) jeweils von gegenüberliegenden Seiten her mit identischen Kräften beaufschlagt, so daß praktisch keine Beanspruchung auf Biegung eintritt. Der ortsfeste Anlenkpunkt (35) der Kniehebelpaare (31) sitzt insbesondere an der zugehörigen Laufschiene (23), die aufgrund ihrer U-förmigen Querschnittsgestaltung eine hohe Eigensteifigkeit aufweist und Reibungs- und Stromstoßkräfte bei eingefahrenem Fahrgestell (21) vom Einfahr-Anlenkpunkt (36' gemäß Fig.3 unten) zumindest bis nahe an die Traverse (25) heranleitet. Der ortsfeste Anlenkpunkt (35) der Kniehebelpaare (31) ist dabei zwischen zwei dieser Laufschiene (23) zugeordneten Laufrädern (22) des Fahrgestells (21) vorgesehen. Der Abstand zwischen dem ortsfesten Anlenkpunkt (35) und dem jeweils darauf zurollenden Laufrad (22) ist größer als der jeweils noch zurückzulegende Fahrweg des Fahrgestells (21).

## Patentansprüche

1. Schaltfeld mit einem in einem Gerüst (1) auf parallelen Laufschienen (23) verfahrbar geführten, mit wenigstens einem Schalter versehenen Fahrgestell (21), das mit einer Antriebseinrichtung gekoppelt ist, welche ein Gewindemutterstück (29) aufweist, das auf eine Gewindespindel (26) aufgedreht ist, welche gegen axiales Verstellen gesichert in einer gegenüber den Laufschienen (23) ortsfest fixierten Traverse (25) drehbar gelagert ist, wobei die Gewindespindel (26) parallel zu und mittig zwischen den Laufschienen (23) verläuft, die starr mit der Traverse (25) verbunden sind, **dadurch gekennzeichnet, daß** ein in Fahrrichtung des Fahrgestells (21) wirkendes Kniehebelgetriebe mit wenigstens einem Kniehebelpaar (31) vorgesehen ist, das einendig am Fahrgestell (21) und andernends gegenüber der Traverse (25) ortsfest abgestützt ist und am Kniehebelgelenkpunkt (32) über einen Lenkerhebel (33) mit dem Gewindemutterstück (29) gekoppelt ist, wobei der Lenkerhebel (33) einerseits am Gewindemutterstück (29) und andernends am Kniehebelgelenkpunkt (32) schwenkbar angelenkt ist.

2. Schaltfeld nach Anspruch 1, **dadurch gekennzeichnet, daß** das Kniehebelgetriebe zwei Kniehebelpaare (31) und zwei Lenkerhebel (33) aufweist, die jeweils spiegelbildlich zur Längsachse der Gewindespindel (26) in einer Ebene angeordnet sind, welche parallel zu der die Laufschienen (23) aufnehmenden Ebene liegt.

3. Schaltfeld nach Anspruch 1 oder 2, **dadurch gekennzeichnet, daß** der Anlenkpunkt (36) des/jeden Kniehebelpaares (31) am Schaltwagen (21) weiter von der Traverse (25) entfernt ist als der ortsfeste Anlenkpunkt (35).

4. Schaltfeld nach Anspruch 3, **dadurch gekennzeichnet, daß** der ortsfeste Anlenkpunkt (35) des Kniehebelpaares (31) im mittleren Bereich zwischen den axialen Endlagen des Gewindemutterstücks (29) und in größerer radialer Entfernung von der Gewindespindel (26) als der Anlenkpunkt (36) des jeweiligen Kniehebelpaares (31) am Fahrgestell (21) liegt.

5. Schaltfeld nach Anspruch 1 oder einem der folgenden, **dadurch gekennzeichnet, daß** der Kniehebelgelenkpunkt (32) in Einfahrrichtung des Fahrgestells (21) jeweils vor dem Gewindemutterstück (29) liegt.

6. Schaltfeld nach Anspruch 1 oder einem der folgenden, **dadurch gekennzeichnet, daß** die Kniehebel (31) jeden Kniehebelpaares in der Endlage des Gewindemutterstückes (29) bei eingefahrenem Fahrgestell (21) in gestreckter Lage zueinander stehen.

7. Schaltfeld nach Anspruch 1 oder einem der folgenden, **dadurch gekennzeichnet, daß** der Lenkerhebel (33) etwa L-förmig ausgebildet ist und mit seinem kurzen Schenkel am Gewindemutterstück (29) und mit seinem längeren Schenkel am Kniehebelgelenkpunkt (32) angelenkt ist und daß in der Endlage des Gewindemutterstücks bei ausgefahrenem Schaltwagen (21) der kurze Schenkel zumindest annähernd senkrecht und der lange Schenkel annähernd parallel zur Längsachse der Gewindespindel (26) steht.

8. Schaltfeld nach Anspruch 1 oder einem der folgenden, **dadurch gekennzeichnet, daß** der ortsfeste Anlenkpunkt (35) der Kniehebelpaare (31) an der zugehörigen Laufschiene (23) und zwischen zwei dieser Laufschiene (23) zugeordneten Laufrädern (22) des Fahrgestells (21) sitzt.

9. Schaltfeld nach Anspruch 1 oder einem der folgenden, **dadurch gekennzeichnet, daß** die Gewindespindel (26) mit einem Elektromotor (37) in Antriebsverbindung steht.

## Claims

1. Switchboard section with a chassis (21) which can be run in a framework (1), on parallel running rails (23), is equipped with at least one switch, and is coupled to a driving device which has
a threaded nut piece (29) which is screwed onto a threaded spindle (26) which is secured against axial displacement and is pivoted in a cross-head (25) which is fixed stationary relative to the running rails (23), wherein the threaded spindle (26) runs parallel to and centrally between the running rails (23) which are rigidly connected to the cross-head (25),
**characterised in that**
a toggle mechanism with at least one toggle lever pair (31) is provided, which acts in the direction of travel of the chassis (21) and which is supported on the chassis (21) at one end, and in a stationary manner relative to the cross-head (25) at the other end,
and at the toggle joint point (32) is coupled to the threaded nut piece (29) via a steering lever (33), wherein the steering lever (33) is linked in a pivoted manner on one side on the threaded nut piece (29) and on the other end at the toggle joint point (32).

2. Switchboard section in accordance with claim 1, **characterised in that** the toggle mechanism has two toggle lever pairs (31) and two steering levers (33), which in each case are arranged mirrorwise to the longitudinal axis of the threaded spindle (26) in a plane which lies parallel to the plane which accommodates the running rails (23).

3. Switchboard section in accordance with claim 1 or 2, **characterised in that** the linkage point (36) of the/each toggle lever pair (31) on the switch gear (21) is further from the cross-head (25) than the fixed linkage point (35).

4. Switchboard section in accordance with claim 3, **characterised in that** the fixed linkage point (35) of the toggle lever pair (31) lies in the central area between the axial end positions of the threaded nut piece (29) and at a greater radial distance from the threaded spindle (26) than the linkage point (36) of the respective toggle lever pair (31) on the chassis (21).

5. Switchboard section in accordance with claim 1 or one of the subsequent claims, **characterised in that** the toggle joint point (32) lies in the direction of entry of the chassis (21), in each case before the threaded nut piece (29).

6. Switchboard section in accordance with claim 1 or one of the subsequent claims, **characterised in that** the toggle levers (31) of each toggle lever pair lie in an extended position relative to one another in the end position of the threaded nut piece (29) when the chassis (21) is driven in.

7. Switchboard section in accordance with claim 1 or one of the subsequent claims, **characterised in that** the steering lever (33) is designed approximately L-shaped and is coupled with its short leg on the threaded nut piece (29) and with its longer leg on the toggle joint point (32), and that in the end position of the threaded nut piece, with the switch gear (21) driven out, the short leg stands at least approximately perpendicular and the long leg approximately parallel to the longitudinal axis of the threaded spindle (26).

8. Switchboard section in accordance with claim 1 or one of the subsequent claims, **characterised in that** the fixed linkage point (35) of the toggle lever pairs (31) sits on the corresponding running rail (23) and between two running wheels (22) of the chassis (21) which are assigned to this running rail (23).

9. Switchboard section in accordance with claim 1 or one of the subsequent claims, **characterised in that** the threaded spindle (26) is connected in a driving manner with an electric motor (37).

## Revendications

1. Poste de commutation comportant un chariot (21) qui est guidé pour pouvoir de déplacer dans un cadre (1) sur des rails de roulement (23), qui est équipé d'au moins un commutateur et qui est couplé avec un dispositif d'entraînement qui comporte une pièce formant écrou fileté (29) qui tourne sur une broche filetée (26) qui est montée à rotation, en étant assurée contre un déplacement axial, dans une traverse (25) qui est montée fixe par rapport aux rails de roulement (23), poste dans lequel la broche filetée (26) s'étend parallèlement aux rails de roulement (23) et au centre de ces dernières qui sont reliées de manière rigide à la traverse (25), **caractérisé en ce que** l'on prévoit un mécanisme à genouillère qui agit dans la direction de déplacement du chariot (21) et qui comporte au moins une genouillère (31) qui est en appui, de manière fixe, à une de ses extrémités, sur le chariot (21) et, à son autre extrémité, par rapport à la traverse (25) et qui est couplée, au point d'articulation de la genouillère (32), avec la pièce formant écrou fileté (29), par l'intermédiaire d'un levier à bielles (33), le levier à bielles (33) étant articulé avec possibilité de pivotement, d'une part, sur la pièce formant écrou fileté (29) et, d'autre part, sur le point d'articulation de la genouillère (32).

2. Poste de commutation selon la revendication 1, **caractérisé en ce que** le mécanisme à genouillère comporte deux genouillères (31) et deux leviers à bielle (33) qui, à chaque fois, sont disposés avec une symétrie spéculaire par rapport à l'axe longitudinal de la broche filetée (26) dans un plan qui est parallèle au plan comprenant les rails de roulement (23).

3. Poste de commutation selon la revendication 1 ou 2, **caractérisé en ce que** le point d'articulation (36) de la ou de chaque genouillère (31) est plus éloigné de la traverse (25) que ne l'est le point d'articulation fixe (35).

4. Poste de commutation selon la revendication 3, **caractérisé en ce que** le point d'articulation fixe (35) de la genouillère (31) se trouve dans la zone médiane se trouvant entre les positions finales axiales de la pièce formant écrou fileté (29) et se trouve à une distance radiale par rapport à la broche filetée (26) plus grande que celle de la genouillère respective (31) se trouvant sur le chariot (21).

5. Poste de commutation selon la revendication 1 et l'une quelconque des revendications suivantes, **caractérisé en ce que** le point d'articulation de la genouillère (32) se trouve, dans la direction de déplacement du chariot (21), à chaque fois, devant la pièce formant écrou fileté (29).

6. Poste de commutation selon la revendication 1 et l'une quelconque des revendications suivantes, **caractérisé en ce que** les leviers articulés de chaque genouillère (31) se trouvent, dans la position finale de la pièce formant écrou fileté (29) dans laquelle le chariot (21) est rentré, en position d'extension l'un en face de l'autre.

7. Poste de commutation selon la revendication 1 et l'une quelconque des revendications suivantes, **caractérisé en ce que** le levier à bielles (33) a sensiblement la forme d'un « L » et est articulé, par sa branche la plus courte, sur la pièce formant écrou fileté (29) et, par sa branche la plus longue, sur le point d'articulation de la genouillère (32) et **en ce que**, dans la position finale de la pièce formant écrou fileté (29) dans laquelle le chariot (21) est sorti, la branche la plus courte se trouve, pour le moins approximativement, verticale et la branche la plus longue se trouve approximativement parallèle à l'axe longitudinal de la broche filetée (26).

8. Poste de commutation selon la revendication 1 et l'une quelconque des revendications suivantes, **caractérisé en ce que** le point d'articulation fixe (35) des genouillères (31) se trouve sur le rail de roulement (23) correspondant et entre deux roues de roulement (22) du chariot (21) qui sont associées à ce rail de roulement (23).

9. Poste de commutation selon la revendication 1 et l'une quelconque des revendications suivantes, **caractérisé en ce que** la broche filetée (26) est en relation d'entraînement avec un moteur électrique (3).
